# EUROPÄISCHE PATENTANMELDUNG

(11) **EP 2 695 834 A1**
(43) Veröffentlichungstag der Anmeldung: **12.02.2014**
(21) Anmeldenummer: 13178643.6
(22) Anmeldetag: 30.07.2013
(51) Int. Cl.: B65G 1/02, E01F 15/14

(54) **Schutzvorrichtung für einen Gegenstand in Form einer lasttragenden Stütze oder dergleichen**

(30) Priorität: 09.08.2012 DE 102012107330
(71) Anmelder: Klein, Egon, 67744 Schweinschied (DE)
(72) Erfinder: Klein, Egon, 67744 Schweinschied (DE)
(74) Vertreter: Müller, Jochen

(57) **Zusammenfassung**

Eine Schutzvorrichtung für einen Gegenstand in Form einer lasttragenden Stütze (1), einer Ecke oder einer Außenwand eines Hallenbüros oder dergleichen umfasst einen Anfahrkörper (7) als Schutzelement. Der Anfahrkörper (7) ist dem Gegenstand beweglich zuzuordnen und/oder umfasst elastisch verformbar und eine Einrichtung, die aufgrund einer Verlagerung des Anfahrkörpers (7) relativ zu dem Gegenstand und/oder dessen Deformation ein optisch und/oder akustisch wahrnehmbares Alarmsignal auslöst und/oder erzeugt.

## Beschreibung

Die Erfindung bezieht sich auf eine Schutzvorrichtung für einen Gegenstand in Form einer lasttragenden Stütze eines Regals, einer Ecke oder einer Außenwand eines Hallenbüros oder dergleichen mit einem Anfahrkörper als Schutzelement.

Die DE 31 298 64 A1 offenbart einen Anfahrschutz für Ecken bzw. Stützen von Bauwerken oder Einbauten, wie insbesondere Regalanlagen, dessen Montage auf der die Fahrbahn darstellenden Bodenfläche erfolgt. Der Anfahrschutz für die zu sichernde Ecke oder Stütze besteht aus einem diese mindestens auf zwei Seiten umschließenden kegelförmig gestalteten Schutzkörper mit an seinem Umfang angeordneten Montagelaschen.

Solche mehr oder weniger starren Schutzvorrichtungen für Stützen von Regalen, insbesondere Palettenregalen oder dergleichen, sind aus der Praxis in vielfältiger Ausgestaltung bekannt und sollen die lasttragenden Stützen vor einer Kollision mit einem Fahrzeug, beispielsweise einem Gabelstapler oder dergleichen und einer die Stabilität beeinträchtigenden Verformung, die aus der Kollision resultiert, schützen.

Als problematisch stellt sich heraus, dass zwar die Schutzvorrichtung einen Aufprall abfängt, aber häufig ein Fahrer der oftmals sehr großen Fahrzeuge von diesem Umstand keine Kenntnis erhält. Dementsprechend ist er nicht in der Lage durch ein Abbremsen des Fahrzeuges die Beschädigung möglichst gering zu halten. Im Weiteren wird aufgrund der fehlenden Kenntnis von der Beschädigung eine notwendige Kontrolle des Stützenschutzes und/oder der Stütze oftmals nicht vorgenommen. Wurde die Stützenschutzvorrichtung oder deren Befestigung bei der Kollision beschädigt, besteht die Gefahr, dass sie einer weiteren Beanspruchung nicht standhält und die Stütze des Regals kann beschädigt werden.

Der Erfindung liegt die Aufgabe zugrunde, eine Schutzvorrichtung der eingangs genannten Art zu schaffen, die die erläuterten Nachteile beseitigt und insbesondere den Fahrer bei einem Aufprall zu informieren.

Erfindungsgemäß wird die Aufgabe durch die Merkmale des unabhängigen Anspruchs gelöst.

Die Unteransprüche stellen vorteilhafte Ausgestaltungen der Erfindung dar.

Eine Schutzvorrichtung für einen Gegenstand in Form einer lasttragenden Stütze, einer Ecke oder einer Außenwand eines Hallenbüros oder dergleichen umfasst einen Anfahrkörper als Schutzelement. Der Anfahrkörper ist dem Gegenstand beweglich zuzuordnen und/oder elastisch verformbar und umfasst eine Einrichtung, die aufgrund einer Verlagerung des Anfahrkörpers relativ zu dem Gegenstand und/oder dessen Deformation ein optisch und/oder akustisch wahrnehmbares Alarmsignal auslöst und/oder erzeugt.

Die Schutzvorrichtung bzw. der Anfahrkörper kann auf einem Boden vor dem zu schützenden Gegenstand und/oder an dem ortsfesten Gegenstand selbst montiert werden, so dass ihr Anfahrkörper bei einer Kollision mit einem Gabelstapler oder dergleichen Fahrzeug einen Schutz für die Stütze darstellt. Selbstverständlich ist die Schutzvorrichtung, die im Folgenden vorrangig im Zusammenhang mit einer Stütze eines Regals beschrieben wird, nicht auf diese Verwendung beschränkt, sondern kann auch beispielsweise zum Schutz von Hallenbüros, Stehlampen, Maschinen oder sonstigen ortsfest angeordneten Gegenständen eingesetzt werden, die vor einer Kollision zu schützen sind, ohne den Schutzbereich zu verlassen. Bei einer Kollision wird der aus einem starren oder elastischen Material bestehende Anfahrkörper relativ zu dem Gegenstand verlagert bzw. im elastischen Bereich deformiert und die dem Anfahrkörper zugeordnete Einrichtung löst ein für den Fahrer optisch und/oder akustisch wahrnehmbares Alarmsignal aus. Der Fahrer kann aufgrund der Information unmittelbar das Fahrzeug stoppen, so dass die Beschädigung im Allgemeinen einen geringen Umfang aufweisen wird. Im Weiteren kann er aufgrund der Information bezüglich eines Aufpralls die Schutzvorrichtung und/oder den Gegenstand bzw. die Stütze auf eine Beschädigung untersuchen und gegebenenfalls eine Reparatur veranlassen. Der Anfahrkörper kann beispielsweise eine Stahlplatte und/oder einen elastischen bzw. wabenartigen Hohlkörper umfassen, in dem zumindest ein Teil der Einrichtung untergebracht ist. Demnach muss nicht zwingend der gesamte Anfahrkörper relativ zu dem ortsfesten Gegenstand, beispielsweise der Stütze des Regals, bewegbar sein, es genügt vielmehr, wenn ein Teil des Anfahrkörpers bei einem Anfahren verlagert und/oder der Anfahrkörper elastisch verformt wird. Selbstverständlich ist es möglich, die Schutzvorrichtung derart auszubilden, dass die für eine Verlagerung und/oder Verformung des Anfahrkörpers zur Auslösung des Alarmsignals benötigte Kraft einstellbar bzw. veränderbar ist.

Nach einer Weiterbildung umfasst der Anfahrkörper eine elastische Wabenstruktur und/oder ist unter Zwischenanordnung von elastischen Dämpfungselementen dem Gegenstand, insbesondere der Stütze, zuzuordnen. Bei dem Anfahrkörper kann es sich um einen so genannten Puffer aus einem elastischen Material handeln. Die Zuordnung des Anfahrkörpers zu der Stütze erfolgt unter Zwischenanordnung der Dämpfungselemente, beispielsweise Federn oder einem Schaumstoff, die einen Stoß absorbieren und gegebenenfalls eine Relativbewegung des Anfahrkörpers zu der Stütze zulassen, ohne die Stütze bzw. das schützende Bauteil zu beschädigen. Vorzugsweise ist der Anfahrkörper aus Kunststoff und/oder Metall gefertigt.

Zur Realisierung einer einfachen auswechselbaren Montage ist zweckmäßigerweise der Anfahrkörper mit dem Gegenstand und/oder einem Boden koppelbar. Die Kopplung kann durch Steckverbindungen, Verschraubungen oder Sonstiges erfolgen.

In Ausgestaltung umfasst die Einrichtung eine Ballhupe, deren Ball zwischen dem Anfahrkörper und dem zugeordneten Gegenstand oder in einem Hohlraum des Anfahrkörpers zu befestigen oder integraler Bestandteil des Anfahrkörpers ist. Die Ballhupe stellt eine sehr einfach zu verwirklichende Lösung dar und erzeugt einen Ton, wenn der Anfahrkörper in Richtung des ortsfesten Gegenstandes, beispielsweise der Stütze, verlagert wird, da bei dieser Relativbewegung des Anfahrkörpers Luft aus dem Ball der Ballhupe gepresst wird. Im einfachsten Fall wird der, insbesondere aus einem Elastomer gefertigte, Ball der Ballhupe in einen zwischen dem Anfahrkörper und der Stütze vorhandenen Freiraum gesteckt. Es ist auch möglich, einen deformierbaren Hohlraum in dem Anfahrkörper auszubilden, aus dem beispielsweise über eine tonerzeugende Membran Luft pressbar ist, wenn das Fahrzeug auf den Anfahrkörper auffährt und diesen deformiert.

In alternativer Ausgestaltung umfasst die Einrichtung einen Schalter, Tastschalter und/oder einen Näherungssensor und/oder eine Energiequelle und/oder eine elektrische und/oder pneumatische und/oder durch Reibung verursachte bzw. ausgelöste Alarmeinrichtung für das Alarmsignal. Wird der Anfahrkörper in Richtung des vorzugsweise als Stütze ausgebildeten Gegenstandes verlagert, dann erfolgt eine Betätigung des Schalters oder der Näherungssensor erfasst diese Bewegung und die Alarmeinrichtung wird in Betrieb gesetzt, um den Fahrer des Gabelstaplers von diesem Umstand zu informieren. Als Energiequelle kann beispielsweise eine kleine Batterie verbaut sein. So genannte Knopfzellen-Batterien sind sehr langlebig und benötigen nur einen kleinen Einbauraum, beispielsweise zwischen dem Anfahrkörper und der Stütze. Es ist auch die Anordnung eines Piezoelementes möglich. Ein Signalton kann auch durch die Reibung von zwei Bauteilen erzeugt werden, wenn diese Bauteile relativ zueinander verlagert werden.

Vorzugsweise ist die Alarmeinrichtung Bestandteil der Schutzvorrichtung und/oder drahtgebunden oder drahtlos mit dem Schalter verbunden. Der Schalter kann als Funkschalter beispielsweise eine in Augenhöhe an der Stütze oder auf dem Gabelstapler befestigte Alarmeinrichtung ansprechen. Zweckmäßigerweise umfasst die Alarmeinrichtung eine Sirene und/oder eine Warnlampe.

Um sicherzustellen, dass die Unfallstelle von einer Person in Augenschein genommen wird, ist die Alarmeinrichtung manuell ausschaltbar. Demzufolge bleibt ein Alarm solange gesetzt bist ein manuelles Rücksetzen erfolgt.

Alternativ oder zusätzlich ist die Einrichtung eindeutig adressierbar und mit einem zentralen Rechner zur Darstellung eines Alarmsignals verbunden.

Zur Erhöhung der Schutzwirkung ist vorzugsweise der Anfahrkörper mit einem Boden koppelbar, weist insbesondere an seiner dem Boden zugeordneten Stirnseite vorstehende Stifte auf, die in bodenseitige Bohrungen einsetzbar sind. Der Anfahrkörper kann beispielsweise über ein Scharnier an einer Bodenplatte zur Verschraubung mit dem Boden befestigt oder mit den in bodenseitige Bohrungen eintauchenden Stiften versehen sein.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert. Die Erfindung wird im Folgenden anhand von zwei Ausführungsbeispielen unter Bezugnahme auf die zugehörige Zeichnung näher erläutert. Es zeigt:

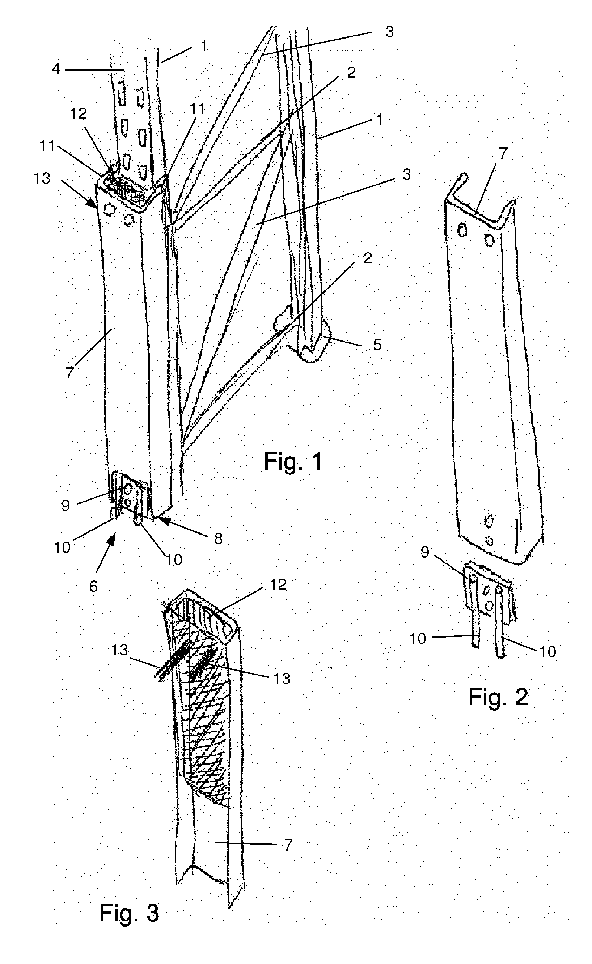

- Fig.1: eine perspektivische Teildarstellung eines Regals mit zwei vertikalen Stützen und einer Schutzvorrichtung nach der Erfindung,
- Fig.2: eine perspektivische Teildarstellung der Schutzvorrichtung nach Fig. 1,
- Fig.3: eine weitere perspektivische Teildarstellung der Schutzvorrichtung nach Fig. 2 und

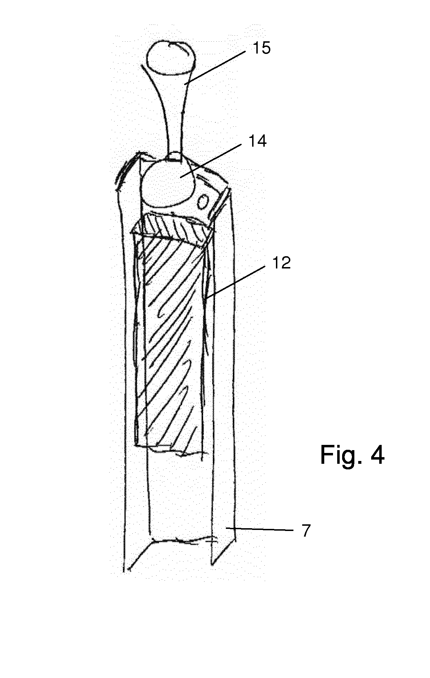

- Fig.4: eine perspektivische Teildarstellung der Schutzvorrichtung nach Fig. 1 in alternativer Ausgestaltung.

Das Regal dient zur Aufnahme von mit Gütern beladenen Paletten, Gitterboxen, Lagerböden oder dergleichen und ist aus mehreren vertikalen Stützen 1 zusammengesetzt, wobei jeweils zwei benachbarte Stützen 1, die Gegenstände in Sinne der Erfindung darstellen, mittels versteifender Horizontalstreben 2 und Diagonalstreben 3 zu einem Ständerpaar verbunden sind. Jede der Stützen 1 besteht aus einem mehrfach abgekanteten Blechprofil, dessen einer Schenkel 4 mit einem Lochbild für hakenartige Einhängenasen von Horizontalträgern versehen ist, und steht mittels einer Fußplatte 5 auf dem Boden.

Eine im Bodenbereich vorgesehene Schutzvorrichtung 6 umfasst einen Anfahrkörper 7, der einen U-förmigen Querschnitt aufweist und im montierten Zustand die zugeordnete Stütze 1 bereichsweise überdeckt, um die Stütze 1 vor einer kollisionsbedingten Beschädigung zu schützen. Damit der Anfahrschutz relativ zu der Stütze 1 beweglich ist, ist an seiner dem Boden zugewandten Stirnseite 8 eine Halteplatte 9 mit zwei Stiften 10 angeordnet, die mit Spiel in bodenseitige Bohrungen eingesetzt werden. Beabstandet zu den Stiften 10 sind Verschraubungen 13 zur Verbindung des Anfahrkörpers 7 mit der Stütze 1 vorgesehen. Zwischen den Schenkeln 11 des Anfahrkörpers 7 befindet sich ein elastisches Dämpfungselement 12, in dem eine Einrichtung zur Auslösung und Erzeugung eines akustisch wahrnehmbaren Alarmsignals untergebracht ist. Im Einzelnen umfasst die Einrichtung einen Schalter, der bei einer Verlagerung des Anfahrkörpers 7 in Richtung der Stütze 1 betätigt wird, worauf eine mit einer Batterie verbundene Sirene einen für einen Fahrer eines Gabelstaplers hörbaren Ton abgibt. Der Fahrer wird auf diese Weise auf die Kollision mit der Stütze aufmerksam gemacht und kann die Stütze und/oder die Schutzvorrichtung 6 begutachten und gegebenenfalls eine Reparatur veranlassen.

In alternativer Ausgestaltung ist zwischen der Stütze 1 und dem Anfahrkörper 7 ein elastischer Ball 14 einer Ballhupe 15 angeordnet, aus dem zur Erzeugung eines Hupensignals beim Verlagern des Anfahrkörpers 7 in Richtung der Stütze 1 Luft gepresst wird.

### Bezugszeichenliste

- 1.: Stütze
- 2.: Strebe
- 3.: Strebe
- 4.: Schenkel
- 5.: Fußplatte
- 6.: Schutzvorrichtung
- 7.: Anfahrkörper
- 8.: Stirnseite
- 9.: Halteplatte
- 10.: Stift
- 11.: Schenkel von 7
- 12.: Dämpfungselement
- 13.: Verschraubung
- 14.: Ball
- 15.: Ballhupe

## Patentansprüche

1. Schutzvorrichtung für einen Gegenstand in Form einer lasttragenden Stütze (1), einer Ecke oder einer Außenwand eines Hallenbüros oder dergleichen mit einem Anfahrkörper (7) als Schutzelement, **dadurch gekennzeichnet, dass** der Anfahrkörper (7) dem Gegenstand beweglich zuzuordnen und/oder elastisch verformbar ist und eine Einrichtung umfasst, die aufgrund einer Verlagerung des Anfahrkörpers (7) relativ zu dem Gegenstand und/oder dessen Deformation ein optisch und/oder akustisch wahrnehmbares Alarmsignal auslöst und/oder erzeugt.

2. Schutzvorrichtung nach Anspruch 1 oder 2, **dadurch gekennzeichnet, dass** der Anfahrkörper (7) eine elastische Wabenstruktur umfasst und/oder unter Zwischenanordnung von elastischen Dämpfungselementen (12) der Stütze (1) zuzuordnen ist.

3. Schutzvorrichtung nach einem der Ansprüche 1 bis 3, **dadurch gekennzeichnet, dass** der Anfahrkörper (7) aus Kunststoff und/oder Metall gefertigt ist.

4. Schutzvorrichtung nach einem der Ansprüche 1 bis 4, **dadurch gekennzeichnet, dass** der Anfahrkörper (7) mit dem Gegenstand, insbesondere der Stütze (1), und/oder einem Boden koppelbar ist.

5. Schutzvorrichtung nach Anspruch 1, **dadurch gekennzeichnet, dass** die Einrichtung eine Ballhupe (15) umfasst, deren Ball (14) zwischen dem Anfahrkörper (7) und dem zugeordneten Gegenstand oder in einem Hohlraum des Anfahrkörpers (7) zu befestigen oder integraler Bestandteil des Anfahrkörpers (7) ist.

6. Schutzvorrichtung nach Anspruch 1, **dadurch gekennzeichnet, dass** die Einrichtung einen Schalter, vorzugsweise einen Tastschalter und/oder einen Näherungssensor und/oder eine Energiequelle und/oder eine elektrische und/oder pneumatische und/oder durch Reibung verursachte Alarmeinrichtung für das Alarmsignal umfasst.

7. Schutzvorrichtung nach Anspruch 6, **dadurch gekennzeichnet, dass** die Alarmeinrichtung Bestandteil der Schutzvorrichtung (6) und/oder drahtgebunden oder drahtlos mit dem Schalter verbunden ist.

8. Schutzvorrichtung nach Anspruch 6 oder 7, **dadurch gekennzeichnet, dass** die Alarmeinrichtung eine Sirene und/oder eine Warnlampe umfasst.

9. Schutzvorrichtung nach einem der Ansprüche 6 bis 8, **dadurch gekennzeichnet, dass** die Alarmeinrichtung manuell ausschaltbar ist.

10. Schutzvorrichtung nach Anspruch 1, **dadurch gekennzeichnet, dass** die Einrichtung eindeutig adressierbar und mit einem zentralen Rechner zur Darstellung eines Alarmsignals verbunden ist.

11. Schutzvorrichtung nach Anspruch 1, **dadurch gekennzeichnet, dass** der Anfahrkörper (7) an seiner dem Boden zugeordneten Stirnseite (8) vorstehende Stifte (10) aufweist, die in bodenseitige Bohrungen einsetzbar sind.
